(19) Europäisches Patentamt
European Patent Office
Office européen des brevets

(11)  **EP 1 922 530 B1**

(12)  **EUROPÄISCHE PATENTSCHRIFT**

(45) Veröffentlichungstag und Bekanntmachung des Hinweises auf die Patenterteilung:
**03.05.2017   Patentblatt 2017/18**

(51) Int Cl.:
*G01H 1/00* (2006.01)     *G01M 13/02* (2006.01)

(21) Anmeldenummer: **07702639.1**

(86) Internationale Anmeldenummer:
**PCT/EP2007/000134**

(22) Anmeldetag: **10.01.2007**

(87) Internationale Veröffentlichungsnummer:
**WO 2007/090491 (16.08.2007 Gazette 2007/33)**

(54) **VERFAHREN UND EINRICHTUNG ZUR DETEKTION DES ORTES EINER IMPULSARTIGEN MECHANISCHEN EINWIRKUNG AUF EIN ANLAGENTEIL**

METHOD AND DEVICE FOR DETECTING THE POSITION OF A PULSED MECHANICAL EFFECT ON A PLANT COMPONENT

PROCÉDÉ ET DISPOSITIF PERMETTANT DE DÉTECTER L'ENDROIT OÙ UN EFFET MÉCANIQUE IMPULSIONNEL EST APPLIQUÉ SUR UNE PARTIE D'UNE INSTALLATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2006   DE 102006004941**

(43) Veröffentlichungstag der Anmeldung:
**21.05.2008   Patentblatt 2008/21**

(73) Patentinhaber: **AREVA GmbH**
**91052 Erlangen (DE)**

(72) Erfinder:
• **BECHTOLD, Bela**
  **91096 Möhrendorf (DE)**
• **JAX, Peter**
  **91056 Erlangen (DE)**
• **OCELIK, Vojtech**
  **91054 Erlangen (DE)**
• **ZACH, Jan**
  **91058 Erlangen (DE)**

(74) Vertreter: **Meissner Bolte Partnerschaft mbB**
**Bankgasse 3**
**90402 Nürnberg (DE)**

(56) Entgegenhaltungen:
WO-A-03/071243     WO-A-2004/040246
DE-A1- 2 223 321

## Beschreibung

Die Erfindung bezieht sich auf ein Verfahren und auf eine Einrichtung zur Detektion des Ortes einer impulsartigen mechanischen Einwirkung auf ein Anlagenteil.

In einer Vielzahl von Anwendungsfällen ist es erforderlich, den ordnungsgemäßen Betrieb eines Anlagenteils, beispielsweise einer Rohrleitung oder eines Behälters der chemischen Verfahrenstechnik oder einer Strömungsmaschine, fortwährend zu überwachen, um Störungen rechtzeitig zu erkennen und schwerwiegende Folgeschäden zu vermeiden. Für eine derartige Überwachung sind im Stand der Technik eine Vielzahl von Verfahren bekannt.

In der EP 0 765 466 B1 ist beispielsweise vorgeschlagen worden, die Überwachung der Schwingungen von Turbinenschaufeln mit Hilfe von Mikrowellen vorzunehmen, die auf die Turbinenschaufeln gerichtet sind. Aus der Modulation der an den Turbinenschaufeln reflektierten Mikrowellen kann auf den Schwingungszustand der Turbine geschlossen werden.

Bei dem aus der DE 198 57 552 A1 bekannten Verfahren wird der Bruch der Welle einer Turbine durch eine Messung der Drehfrequenzen an den Enden der Welle erfasst.

In der DE 198 43 615 C2 wird vorgeschlagen, die Diagnose des Zustandes eines Verbrennungsantriebes mit Hilfe einer Analyse des Frequenzspektrums der Messsignale vorzunehmen, die mit Hilfe eines im Lufteinlass- oder Abgasbereiches angeordneten Schallaufnehmers aufgenommen werden.

In der DE 197 27 114 C2 werden zur Überwachung einer Maschine anstelle des Luftschalls die ihr auftretenden Körperschallsignale erfasst. Auch bei diesem bekannten Verfahren werden die jeweils ermittelten Frequenzspektren der vom Körperschallaufnehmer erfassten Messsignale analysiert.

Auch bei dem in der DE 195 45 008 C2 offenbarten Verfahren wird während des Betriebs der Maschine das Frequenzspektrum des von einem Überwachungssensor, beispielsweise einem Beschleunigungsaufnehmer erfassten Messsignals analysiert und mit einem Referenzfrequenzspektrum verglichen.

Eine Analyse des Frequenzspektrums der an einer Turbine aufgenommenen Körperschallsignale wird auch bei dem aus der US 6,301,572 B1 bekannten Verfahren vorgenommen. Hierzu werden die Fouriertransformierten des Messsignals in einem neuronalen Netz mit Regeln der Fuzzy-Logik analysiert um auf diese Weise Information über den Zustand der Turbine zu erhalten.

Ein besonderes Problem stellen von der Strömung mitgeführte und auf das Anlagenteil auftreffende lose Teile dar, die nur eine impulsartige, kurzzeitige Einwirkung verursachen, deren sicherer Nachweis entsprechend problematisch ist.

In der GB 2288235 wird vorgeschlagen, das Auftreten loser, in einem strömenden Medium mitgeführter Teile durch die beim Auftreffen der Teile auf ein Anlagenteil erzeugten Schwingungen zu erfassen. Hierzu wird ein Schallaufnehmer am Anlagenteil angeordnet und die von diesem erzeugten Messsignale werden einem lernfähigen neuronalen Netz zugeleitet, das anhand der auftretenden Muster entscheiden kann ob es sich um ein normales Untergrundgeräusch handelt oder nicht.

Die mit dem Auftreten loser Teile in einem strömenden Medium einhergehenden Probleme können beispielsweise bei Gasturbinen entstehen, deren Brennkammer zum Schutz vor Überhitzung mit Keramikkacheln ausgekleidet ist. Diese Keramikkacheln werden durch in der Brennkammer auftretende Druckwechselschwankungen dynamisch hoch beansprucht. Dabei kann es passieren, dass Teilstücke der Kacheln an den jeweiligen Halterungen ausbrechen, von der Strömung des Abgases mitgerissen werden und auf die erste Leitschaufelreihe der Gasturbine aufschlagen. Dies kann zu einer Beschädigung der Beschichtung der Leitschaufeln und zu einer Zerstörung der dahinter angeordneten Laufschaufeln führen. Außerdem besteht die Gefahr, dass sich eine durch das Ausbrechen von Teilstücken bereits beschädigte Kachel vollständig aus den Halterungen löst und zu einem entsprechend massiven Schaden an der Gasturbine führen kann. In diesem Fall indiziert das Auftreffen kleiner loser Teile oder einer einzelnen Kachel einen bevorstehenden Totalabriss einer Kachel bzw. mehrerer Kacheln, so dass rechtzeitiges Abschalten der Gasturbine und rechtzeitiger Austausch der beschädigten Kacheln einen größeren Schaden verhindert.

Um das Eindringen von Fremdteilen in eine Gasturbine feststellen zu können, ist in der US 4,888,948 am Einlass der Turbine ein Sensor angeordnet, mit dem eine von den Fremdkörpern induzierte elektrische Ladung erfasst wird.

Zur Überwachung derartiger Aufschläge auf ein Anlagenteil ist es auch aus der WO 01/75272 A2 grundsätzlich bekannt, mit Hilfe geeigneter Sensoren den Aufschlag ebenso wie bei dem aus der GB 2288235 bekannten Verfahren durch einen dabei entstehenden Körperschall zu erfassen. Hierbei tritt aber insbesondere bei Gasturbinen das Problem auf, dass die normalen Betriebsgeräusche so hoch sind, dass auch der durch den Aufschlag einer gesamten Kachel auf die Leitschaufel der Gasturbine am Sensor erzeugte Signalanteil kleiner ist als der durch die normalen Betriebsgeräusche erzeugte Untergrund, so dass insbesondere das Auftreffen kleinerer Teilstücke durch eine alleinige Überwachung der Amplituden der Körperschallsignale nicht detektiert werden kann. Zur Verbesserung des Signal-Rauschverhältnisses wird deshalb in dieser Druckschrift vorgeschlagen, das von einem Messwertaufnehmer aufgenommene Messsignal einer Band- oder Hochpassfilterung zu unterziehen, um auf diese Weise die beim normalen Betrieb der Turbine entstehenden Körperschallsignale zu eliminieren. Diese Maßnahmen reichen jedoch nicht aus, um bei hohen und zeitlich variierenden Hintergrundgeräuschen ein impulsartiges Ereignis sicher zu identifizieren.

Aus der WO 03/071243 A1 ist ein Verfahren zur Detektion einer impulsartigen mechanischen Einrichtung auf ein Anlagenteil bekannt, bei dem das erfasste Körperschallsignal einer gefensterten Fouriertransformation unterzogen wird. Aus einer Vielzahl der auf diese Weise ermittelten Fourierspektren wird mit den dort näher erläuterten Algorithmen eine Bewertungsfunktion K abgeleitet, die das Auftreten einer impulsartigen mechanischen Einwirkung auf das Anlagenteil anzeigt. Der in dieser Druckschrift angegebene Algorithmus zur Ableitung der Bewertungsfunktion K ermöglicht die präzise Erkennung eines dem verrauschten Messsignal überlagerten, auf eine impulsartige Einwirkung zurückzuführenden Signalanteils.

Insbesondere bei großvolumigen Anlagenteilen mit einer Vielzahl darin eingebauter Komponenten ist neben der Information, dass eine solche, nicht dem normalen Betriebsgeräusch zugehörige impulsartige mechanische Einwirkung stattgefunden hat, auch noch wichtig, in Erfahrung zu bringen, an welchem Ort im Anlagenteil diese Einwirkung stattgefunden hat. Hierzu ist es grundsätzlich bekannt, eine Mehrzahl von Sensoren an unterschiedlichen Orten am Anlagenteil anzubringen und aus den Zeitdifferenzen zwischen den von den einzelnen Sensoren jeweils detektierten Ereignissen und der Schallgeschwindigkeit im Anlagenteil auf den Ort der Einwirkung zu schließen. Der Ort der Einwirkung ist auch bei der Turbinenüberwachung von Interesse, um beurteilen zu können, ob es sich um einen Kachelflug handelt (Auftreffen einer abgelösten Kachel auf Leitschaufelträger oder auf Außenschale des Brennkammerraums), oder ob die impulsartige Einwirkung durch betriebsbedingte Reibungsvorgänge aus anderen Bereichen der Turbine verursacht wird.

Für eine genaue Bestimmung des Einwirkungsortes ist es erforderlich, aus den Zeitfenstern, in denen das Ereignis in den Sensoren jeweils detektiert wird, jeweils den Beginn des Ereignisses möglichst exakt zu bestimmen.

Aus der DE 22 23 321 C2 ist es bekannt, das Auftreten eines Risses und dessen Ort mit einer Mehrzahl von am Anlagenteil angeordneten piezoelektrischen Wandlern zu detektieren. Hierzu werden die Zeitunterschiede der Maxima der von den Wandlern empfangenen Signale ausgewertet.

Der Erfindung liegt nun die Aufgabe zugrunde, ein Verfahren zur Detektion des Ortes einer impulsartigen mechanischen Einwirkungen auf ein Anlagenteil anzugeben, das gegenüber den im Stand der Technik bekannten Verfahren weiter verbessert ist. Außerdem liegt der Erfindung die Aufgabe zugrunde, eine Einrichtung zur Durchführung des Verfahrens anzugeben.

Hinsichtlich des Verfahrens wird die genannte Aufgabe gelöst gemäß der Erfindung mit einem Verfahren mit den Merkmalen des Patentanspruches 1. Bei dem Verfahren zur Detektion des Ortes einer impulsartigen mechanischen Einwirkung auf ein Anlagenteil wird ein im Anlagenteil vorhandenes Betriebsgeräusch kontinuierlich mit einer Mehrzahl von am Anlagenteil angeordneten Sensoren erfasst und von diesem in ein Messsignal umgewandelt, wobei zur Analyse der Messsignale folgende Verfahrensschritte vorgesehen sind:

a) Die Messsignale werden jeweils in Zeitabständen für einen Zeitbereich gespeichert,
b) in zeitlich in ersten Zeitschritten aufeinanderfolgenden innerhalb des Zeitbereiches liegenden ersten Zeitfenstern wird mit vorgegebenen ersten Parametern einer mathematischen Transformationsvorschrift ein erster Betrag der Transformierten jedes Messsignals ermittelt,
c) aus den für jeden der vorgegebenen ersten Parameter bestimmten ersten Beträgen wird für jeden ersten Zeitschritt jeweils eine erste Bewertungsfunktion abgeleitet,
d) die ersten Bewertungsfunktionen werden jeweils mit einem ersten Schwellwert verglichen und das Überschreiten des ersten Schwellwerts von zumindest einer der ersten Bewertungsfunktionen zu einem Triggerzeitpunkt wird als Indiz für das Vorliegen eines die mechanische Einwirkung anzeigenden impulsartigen Signalanteiles gewertet,
e) in zeitlich in zweiten Zeitschritten aufeinanderfolgenden innerhalb des Zeitbereiches liegenden zweiten Zeitfenstern, die kleiner sind als die ersten Zeitfenster, werden mit vorgegebenen zweiten Parametern der mathematischen Transformationsvorschrift und mit denselben Algorithmen zweite Bewertungsfunktionen ermittelt,
f) aus den Zeitpunkten, in denen die zweiten Bewertungsfunktionen jeweils ein vorgegebenes Kriterium erfüllen und aus den sich daraus ergebenden Laufzeitdifferenzen wird der Ort der Einwirkung bestimmt.

Die Erfindung beruht dabei auf der Überlegung, dass die Empfindlichkeit, mit der eine impulsartige Einwirkung detektiert werden kann, wesentlich von der Größe des Zeitfensters abhängt und die Zeitdauer eines typischen Bursts überschreiten sollte, wobei diese Überschreitung jedoch nicht zu hoch sein darf, so dass das Zeitfenster noch in der Größenordnung der Zeitdauer des Bursts liegt (Zeitdauer < Zeitfenster < Zehnfaches der Zeitdauer). Ein großes Zeitfenster hat jedoch den Nachteil, dass sich die Bewertungsfunktion nur sehr langsam ändert, so dass der Zeitpunkt der Einwirkung, d. h. des Beginns des Burstsignals nur relativ ungenau bestimmt werden kann. Wird nun in einem der Kanäle ein Burstsignal identifiziert und die Bewertungsfunktion erneut mit einem signifikant kleineren Zeitfenster berechnet, so ist die Zeitkonstante, mit der sich die Bewertungsfunktion ändert, entsprechend verringert, und es ist eine genauere Bestimmung ihres Anstiegszeitpunktes und damit des Zeitpunktes der Einwirkung möglich.

Die zweitgenannte Aufgabe wird gemäß der Erfindung mit einer Einrichtung mit den Merkmalen des Patentanspruches 8 gelöst, deren Vorteile sich sinngemäß aus den zu Patentanspruch 1 angegebenen Vorteilen ergeben.

Vorteilhafte Ausgestaltungen des Verfahrens und der Einrichtung gemäß der Erfindung sind in den jeweiligen Unteransprüchen angegeben.

Zur weiteren Erläuterung der Erfindung wird auf die Zeichnung verwiesen. Es zeigen:

Fig. 1         ein Ausführungsbeispiel für eine Einrichtung gemäß der Erfindung in einer schematischen Prinzipskizze,

Fig. 2         ein vereinfachtes Diagramm, in dem das Messsignal M in zeitlich hoher Auflösung gegen die Zeit t aufgetragen ist,

Fig. 3         ein Diagramm, in dem der aus dem Messsignal durch schnelle Fouriertransformation ermittelte Betrag A des Frequenzspektrums bei einer vorgegebenen Frequenz $f_i$ gegen die Zeit t aufgetragen ist,

Fig. 4         ein Diagramm, in dem der gleitende zeitliche Mittelwert $\bar{A}$ der Beträge des Spektrums bei einer vorgegebenen Frequenz $f_i$ ebenfalls gegen die Zeit t aufgetragen ist,

Fig. 5         ein Diagramm, in dem ein idealisiertes Messsignal M mit einem im Messsignal unmittelbar erkennbaren Burst gegen die Zeit t aufgetragen ist,

Fig. 6         ein Diagramm, in dem mit unterschiedlichen Zeitfenstern aus dem Messsignal gemäß Fig. 5 ermittelte Bewertungsfunktionen $K_1$ und $K_2$ gegen die Zeit t aufgetragen sind,

Fig. 7a-f      jeweils Diagramme, in denen das von in unterschiedlichen Positionen angeordneten Sensoren jeweils erfasste Betriebsgeräusch (Messsignal M) eines Anlagenteils in Anwesenheit einer Fremdeinwirkung sowie die mit dem Verfahren gemäß der Erfindung mit einem zweiten Zeitfenster ermittelte Bewertungsfunktion ($K_2$) gegen die Zeit t aufgetragen sind,

Fig. 8 und 9   jeweils ein Diagramm, in dem die für einen Sensor mit einem zweiten Zeitfenster ermittelte Bewertungsfunktion $K_2$ bzw. deren zeitliche Ableitung $dK_2/dt$ gegen die Zeit t aufgetragen sind.

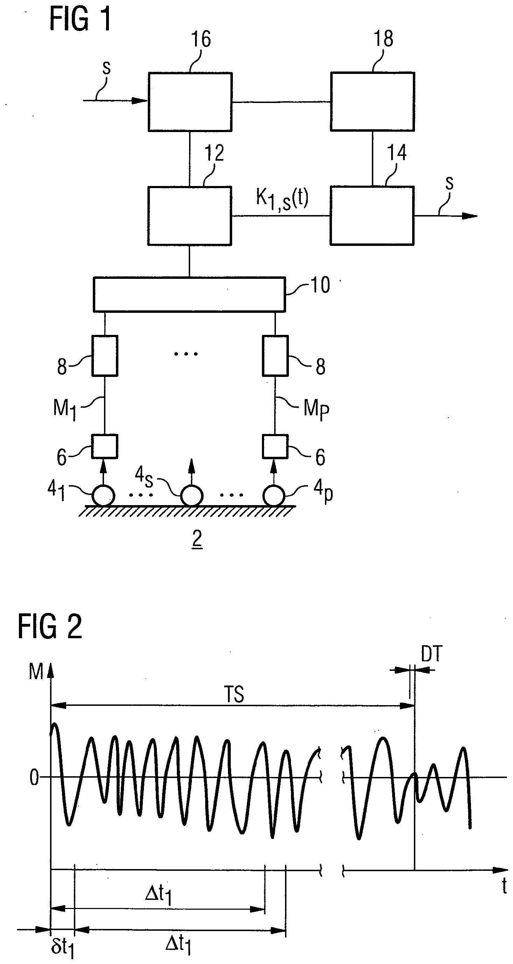

Gemäß Fig. 1 sind an einem Anlagenteil 2, beispielsweise eine Gasturbine, eine Mehrzahl P von Messwertaufnehmern oder Sensoren $4_{1,..s,..P}$, insbesondere piezoelektrische Beschleunigungsaufnehmer, angeordnet, die jeweils das im Anlagenteil 2 vorhandene und sich in Form von Körperschall ausbreitende Betriebsgeräusch in mehreren Messkanälen kontinuierlich erfassen. Die Sensoren $4_s$ wandeln die Körperschallsignale jeweils in ein elektrisches Messsignal $M_s$ um, das in einem Vorverstärker 6 verstärkt und an einen Analog-Digital-Wandler 8 weitergeleitet wird, der an einen digitalen Speicher 10 angeschlossen ist. Das jeweils anstehende verstärkte Messsignal $M_s$ wird digitalisiert, zwischengespeichert und zur weiteren Bearbeitung an eine Recheneinrichtung 12 weiterleitet, in der der erfindungsgemäße Auswertealgorithmus implementiert ist.

Die Recheneinrichtung 12 enthält für jeden Messkanal einen Prozessor für eine schnelle Berechnung einer Transformierten der vom Analog/Digital-Wandler 8 weitergegebenen Daten sowie einen Ringspeicher zum Speichern einer Anzahl L der durch die Transformation ermittelten Transformierten. Bei dieser Transformation handelt es sich im Beispiel um eine schnelle gefensterte Fouriertransformation FFT. Als Transformation einer mathematischen Funktion (das Messsignal $M_s(t)$) im Sinne der vorliegenden Erfindung ist jede mathematische Operation zu verstehen, mit der es möglich ist, Darstellung dieser Funktion mit einem vollständigen Satz orthogonaler Basisfunktionen darzustellen. Diese orthogonalen Basisfunktionen können - wie dies bei der Fouriertransformation der Fall ist - durch die Exponentialfunktion $e^{-i\omega t}$ gebildet sein. Grundsätzlich können jedoch auch andere periodische Funktionen als orthogonales Basissystem verwendet werden. Mit diesen Transformationen werden diskrete Transformierte mit einem vorbestimmten Satz von diskreten Parametern berechnet. Dies sind bei der Fouriertransformation fest vorgegebene Frequenzen $f_{i=\omega i/2\pi}$, die entsprechend dem jeweiligen Anlagenteil ausgewählt sind, wie dies beispielsweise für eine Turbine in der WO 03/071243 näher dargestellt ist.

Aus den in der Recheneinrichtung 12 ermittelten diskreten Transformierten wird für jeden Messkanal nach einem in der Recheneinrichtung 12 implementierten und nachfolgend näher erläuterten Algorithmus von der Zeit t abhängige erste Bewertungsfunktion $K_{1,s}(t)$ ermittelt, die in einer Vergleichseinrichtung 14 mit einem vorgegebenen ersten Schwellwert $K_{1,0}$ verglichen wird. Ein Überschreiten des ersten Schwellwertes $K_{1,0}$ (Alarmschwelle) in einem der Kanäle (bei einem der Messsignale $M_s$) dient als Indiz für das Vorliegen eines durch eine transiente mechanische Einwirkung verursachten impulsartigen Signalanteiles in diesem Kanal und generiert ein entsprechendes Triggersignal S. Das Triggersignal S wird einem Transientenrekorder 16 zugeführt, in dem die in der Recheneinrichtung 12 ermittelten Daten für einen Zeitbereich von beispielsweise 10 s aufgezeichnet und an einen Auswerterechner 18 weitergegeben werden, um mit diesem eine nachstehend erläuterte nachträgliche Analyse der Messsignale $M_s(t)$ durchführen zu können, die es ermöglicht, aus der Differenz der Zeitpunkte $t_s$ (Laufzeitdifferenzen), in denen in den Kanälen jeweils das Eintreffen eines Ereignisses registriert wird, der Kenntnis der Geometrie des Anlagenteils, der Position der Sensoren und der Schallgeschwindigkeit auf den Ort der impulsartigen Einwirkung zu schließen.

In Fig. 2 ist anhand einer Prinzipskizze der erste Schritt der in der Recheneinheit 12 (Fig. 1) implementierten Vorgehensweise erläutert. Das mit hoher Taktrate (typisch 80 - 100 kHz) in jedem Kanal digitalisierte Messsignal $M_s$ (in der Figur aus Gründen der Übersichtlichkeit analog dargestellt) wird jeweils für einen Zeitbereich TS (typisch etwa 10 s) in einem Zeitabstand DT (entsprechend der Taktrate typisch etwa 0,01 - 0,0125 ms) gespeichert und entsprechend der Taktrate aktualisiert. In einem ersten Zeitfenster $\Delta t_1$ innerhalb dieses Zeitbereiches TS wird das digitalisierte Mess-signal $M_s$ einer schnellen diskreten Fouriertransformation unterzogen. Anschließend wird dieses erste Zeitfenster $\Delta t_1$ um einen ersten Zeitschritt $\delta t_1$ verschoben und in einem überlappenden ersten Zeitfenster $\Delta t_1$ gleicher Länge erneut eine Fouriertransformation durchgeführt. Im Ausführungsbeispiel beträgt $\Delta t_1$ = 25,6 ms und $\delta t_1$ = 3,2 ms. Auf diese Weise werden für jedes erste Zeitfenster $\Delta t_1$ und für eine endliche Anzahl erster diskreter Frequenzen $f_{1,i}$ zeitabhängige erste Beträge $A_{1,s}(f_{1,i},t)$ ermittelt.

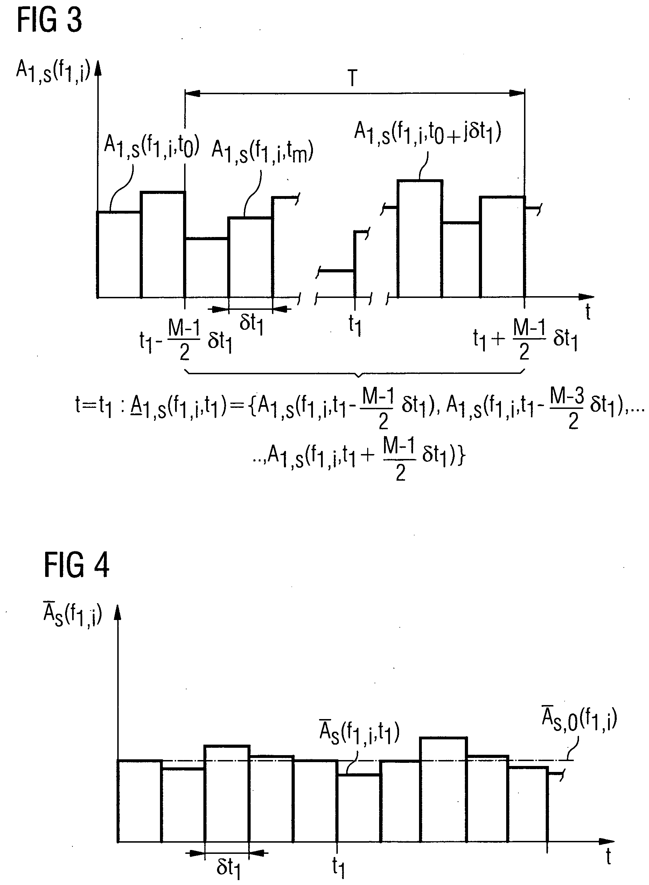

In Fig. 3 ist nun der zeitliche Verlauf des ersten Betrages $A_{1,s}(f_{1,i},t)$ bei einer vorgegebenen Frequenz $f_{1,i}$ veranschaulicht. Dieser Fig. ist zu entnehmen, dass dieser Betrag $A_{1,s}(f_{1,i},t)$ bei dieser vorgegebenen Frequenz $f_{1,i}$ zeitlich variiert. Das in der Fig. eingetragene Zeitintervall ist der erste Zeitschritt $\delta t_1$ in dem die schnelle Fouriertransformation aktualisiert wird. Gemäß der Erfindung wird nun für eine Vielzahl N vorgegebener erster Frequenzen $f_{1,i}$ oder Frequenzbereiche und in zeitlich aufeinander folgenden ersten Zeitschritten $\delta t_1$ für zeitlich überlappende erste Zeitfenster $\Delta t_1$ der zugehörige erste Betragswert $A_{1,s}(f_{1,i},t_j)$ mit $t_j = t_0+j\delta t_1$ bestimmt, wobei j eine natürliche Zahl ist.

Von den auf diese Weise gewonnenen ersten Betragswerten $A_{1,s}(f_{1,i},t)$ wird nun ein für diese erste Frequenz $f_{1,i}$ gebildeter Betragsmittelwert $\overline{A}_s$ abgezogen. Die geeigneten Algorithmen für die Bestimmung des Betragsmittelwertes $\overline{A}_s$ hängen vom zu überwachenden Anlagenteil und der Komplexität der zu erwartenden Betriebsgeräusche ab. In einfachen Betriebssituationen genügt es, einen fest vorgegebenen konstanten Betragsmittelwert $\overline{A}_{s,0}(f_{1,i})$ zu verwenden. Günstiger ist es, einen zeitlich variablen Betragsmittelwert $\overline{A}_s(f_{1,i},t)$ gleitend zu bestimmen, wie er in Fig. 4 veranschaulicht ist. Die Verwendung eines gleitenden Betragsmittelwertes $\overline{A}_s(f_{1,i},t)$ ist insbesondere bei der Überwachung von Anlagenteilen von Vorteil, bei denen es zufällige Zustandsänderungen geben kann, in denen das Anlagenteil von einem Betriebszustand in einen anderen wechselt und das Betriebs- oder Hintergrundgeräusch sehr schnell auf ein deutlich anderes Niveau ansteigen oder abfallen kann. Eine solche Zustandsänderung ist bei einer Turbine beispielsweise das Einsetzen eines sogenannten Brummens. Dieses wird verursacht durch die Anordnung der Flammen in einem Ringraum, die dazu führen kann, dass die gesamte Brennkammer zu Resonanzschwingungen angeregt wird, wobei insbesondere die Schwingungsmoden in Umfangsrichtung bevorzugt werden. Diese Resonanzerscheinungen können zum Teil abrupt abbrechen und ebenso abrupt wieder einsetzen. Wird beispielsweise dem in der WO 03/071243 offenbarten Verfahren ein gleitender Betragsmittelwert $\overline{A}_s(f_{1,i},t)$ zugrunde gelegt, der durch eine einfache Mittelwertbildung in Form eines arithmetischen Mittels aus einer Anzahl vorhergehender Beträge gebildet ist, hat sich gezeigt, dass diese Geräuschschwankungen zu Fehlauslösungen führen können. Um solche Fehlauslösungen zu vermeiden, wurde deshalb in der Praxis während des Brummens der Turbine, das anhand einer Analyse der Signalcharakteristik erkannt wird, eine Überwachung auf impulsartige mechanische Einwirkungen unterdrückt.

Auch in anderen Anlagenteilen, beispielsweise in einem Reaktordruckbehälter eines Kernkraftwerkes, sind den kontinuierlichen Grundgeräuschen (Fluidströmung, Pumpengeräusch) betrieblich bedingte kurzzeitige Betriebsgeräusche überlagert, wie sie beispielsweise durch zulässige Änderungen der Betriebsbedingungen und gewollte Eingriffe in den Betriebsablauf (Betätigen von Ventilen, Fahren von Steuerstäben) hervorgerufen sind.

Bei einer insbesondere für Anlagenteile mit relativ langsamen Zustandsänderungen geeigneten iterativen Be-rechnungsmethode wird der Betragsmittelwert $\overline{A}_s$ und eine mittlere quadratische Abweichung (Varianz) für jede Frequenz $f_{1,i}$ gleitend mit Hilfe der Beziehungen

$$\overline{A}_s(f_{1,i},t+\delta t) = k\overline{A}_s(f_{1,i},t) + (1-k)A_{1,s}(f_{1,i},t+\delta t_1)$$

$$\mathrm{var}(A_{1,s}(f_{1,i},t+\delta t_1)) =$$
$$= k\,\mathrm{var}(A_{1,s}(f_{1,i},t)) + (1-k)(A_{1,s}(f_{1,i},t+\delta t_1) - \overline{A}_s(f_{1,i},t))^2$$

bestimmt, wobei $\delta t_1$ der erste Zeitschritt ist, in dem jeweils für ein erstes Zeitfenster $\Delta t_1$ der erste Betrag $A_{1,s}$ berechnet wird. Durch Auswahl des Parameters k wird nun bestimmt, in welchem Ausmaß ein neu hinzu kommender erster Betrag $A_{1,s}(f_{1,i},t+\delta t_1)$ Einfluss auf den neu berechneten Betragsmittelwert $\overline{A}_s(f_{1,i},t+\delta t_1)$ hat. Dieser Ansatz entspricht einer exponentiell gewichteten Mittelwertbildung, wobei k die Adaptionsgeschwindigkeit bestimmt. Bei einer sprunghaften Änderung des Betrages $A_{1,s}(f_i,t)$ von einem konstanten Ausgangswert auf einen ebenfalls konstanten neuen Wert ergäbe sich dann eine annähernd exponentielle Anpassung des neuen Betragsmittelwertes $\overline{A}_s$ auf den neuen, aktuell vorliegenden Betrag $A_{1,s}$ mit einer Zeitkonstante $\tau = \delta t_1/(1-k)$. Für k = 0,999 und $\delta t_1$ = 3,2 ms ergibt sich eine Zeitkonstante $\tau$ von 3,2

s. Eine solche Vorgehensweise ist beispielsweise bei der Überwachung der Betriebsgeräusche eines Kernreaktordruckbehälters geeignet.

Bei der Überwachung von Anlagenteilen, bei denen sehr schnelle Zustandsänderungen beobachtet werden, beispielsweise bei Turbinen, hat sich eine Berechnungsmethode als besonders geeignet herausgestellt, bei der der Betragsmittelwert $\overline{A}_s(f_{1,i},t)$ zeitlich gleitend in Zeitschritten $\delta t_1$ als Funktion der Zeit t aus einem aus M ersten Beträgen $A_{1,s}(f_{1,i},t_m)$ eines Zeitabschnittes T zusammengesetzten und in Fig. 3 veranschaulichten Datensatz $\underline{A}_{1,s}(f_{1,i},t)$ mit Hilfe der Beziehung

$$\overline{A}_s(f_{1,i},t) = (Q_{\alpha,s}(f_{1,i},t) + Q_{1-\alpha,s}(f_{1,i},t))/2$$

bestimmt wird, wobei $Q_{\alpha,s}$ und $Q_{1-\alpha,s}$ das $\alpha$- bzw. $(1-\alpha)$-Quantil der in einem Zeitabschnitt T jeweils bestimmten ersten Beträge $A_{1,s}(f_{1,i},t_m)$ mit $t_m = t + m\delta t_1$ und m eine ganze Zahl sind. Hierzu werden die diesem, beispielsweise symmetrisch zum Zeitpunkt t angeordneten Zeitabschnitt T (in diesem Fall gilt - $\dfrac{M-1}{2} \leq m \leq \dfrac{M-1}{2}$ und M ungerade) und jeweils den dem Zeit-punkt t zugeordneten Datensatz $\underline{A}_{1,s}(f_i,t)$ bildenden zugehörigen ersten Beträge $A_{1,s}(f_i,t_m)$ nach dem Betragswert in einer Reihe sortiert. Das $\alpha$- bzw. $(1-\alpha)$-Quantil ist dann derjenige Betragswert, der sich auf der Position $\alpha M$ bzw. $(1-\alpha)M$ der Reihe befindet. In der Praxis werden für $\alpha$ Werte zwischen $0,7 \leq \alpha \leq 0,8$, vorzugsweise $\alpha = 0,75$ angesetzt.

Mit Hilfe des $\alpha$- und des $(1-\alpha)$-Quantils $Q_{\alpha,s}$ bzw. $Q_{1-\alpha,s}$ wird nun eine mittlere Abweichung $s_s(f_{1,i},t)$ der ersten Beträge $A_{1,s}(f_{1,i},t_n)$ vom Betragsmittelwert $\overline{A}_s(f_{1,i},t)$ mit Hilfe der Beziehung

$$s_s(f_{1,i},t) = \sqrt{\dfrac{Q_{\alpha,s}(f_{1,i},t) - Q_{1-\alpha,s}(f_{1,i},t)}{2q_{1-\alpha,s}}}$$

berechnet, wobei $q_{1-\alpha,s}$ das $(1-\alpha)$-Quantil der normierten Gauß-Verteilung ist.

Mit Hilfe dieses Berechnungsverfahrens (Quantilenmethode) werden somit Mittelwert und Abweichung eines Datensatzes ohne Berücksichtigung der Werte berechnet, die sich außerhalb der durch $\alpha$ und $(1-\alpha)$ definierten Bereiche befinden. Dies bedeutet, dass deutlich höhere Beträge, wie sie durch ein überlagertes Burst-Signal zusätzlich verstärkt auftreten können, nicht berücksichtigt werden und somit auch das Ergebnis nicht verfälschen können. Mit dieser Methode kann ein deutlich kürzerer Zeitabschnitt, beispielsweise ein aus M = 100 ersten Betragswerten $A_{1,s}(f_{1,i},t)$ bestehender Datensatz $\underline{A}_s(f_{1,i},t)$ mit einer Länge des Zeitabschnitts T = 320 ms bei einem Zeitschritt $\delta t_1 = 3,2$ ms, bei gleicher Güte im Ergebnis der Berechnung gewählt werden. Dies hat zur Folge, dass sich der Betragsmittelwert $\overline{A}_s(f_{1,i},t)$ schnellen Änderungen im Betriebsuntergrund anpasst, so dass diese zu keiner Verfälschung der normierten Spektren führen oder Fehlanzeigen in der Überwachung vortäuschen können. Bei einer solchen Vorgehensweise ist es möglich, dass auch während des Brummens der Gasturbine, d.h. wenn durch Resonanzschwingungen im Brennraum deutlich höhere Untergrundgeräusche sehr abrupt, beispielsweise mit einer Zeitkonstante von etwa 0,5 s bei einem Amplitudenanstieg um den Faktor 5 und mehr auftreten, das Aufschlagen loser Teile erkannt wird.

Mit Hilfe des vorstehenden berechneten Betragsmittelwertes $\overline{A}_s(f_{1,i},t)$ und der mittleren Abweichung $s(f_{1,i},t)$ kann nun in einem weiteren Rechenschritt auf der Grundlage des Quantilverfahrens ein verbesserter Betragsmittelwert $\overline{A}_{opt,s}(f_{1,i},t)$ ermittelt werden, indem aus dem jeweils vorliegenden Datensatz $\underline{A}_s(f_{1,i},t)$ diejenigen ersten Beträge $A_{1,s}(f_{1,i},t_m)$ eliminiert werden, die signifikant größer als der vorstehend berechnete Betragsmittelwert $\overline{A}_s(f_{1,i},t)$ sind. In der Praxis hat sich dabei als vorteilhaft herausgestellt, bei der Mittelwertberechnung diejenigen ersten Beträge $A_{1,s}(f_{1,i},t_m)$ zu eliminie-ren, die größer als $\overline{A}_s(f_{1,i},t) + 3s_s(f_{1,i},t)$ sind. Mit dem vollständigen Datensatz $\underline{A}_s(f_{1,i},t)$ wird dann eine erneute Mittelwertberechnung mit Hilfe eines 5- bzw. $(1-\delta)$-Quantils durchgeführt, wobei

$$\delta = \alpha(M-M_E)/M$$

gilt und $M_E$ die Anzahl der ersten Beträge $A_{1,s}(f_{1,i},t_m)$ ist, die größer als $\overline{A}_s(f_{1,i},t) + 3s_s(f_{1,i},t)$ sind. Alternativ hierzu ist es auch möglich und mathematisch identisch, mit einem um diese Beträge reduzierten Datensatz erneut das $\alpha$- bzw. $(1-$

$\alpha$)-Quantil zu bestimmen. Mit Hilfe dieser 5- bzw. $(1-\delta)$-Quantile oder der mit dem reduzierten Datensatz gewonnenen $\alpha$- bzw. $(1-\alpha)$-Quantile wird nun entsprechend der vorstehend genannten Formel ein verbesserter Mittelwert $\overline{A}_{opt,s}(f_{1,i},t)$ bzw. eine verbesserte mittlere Abweichung $s_{opt,s}(f_{1,i},t)$ berechnet.

Mit den vorstehend berechneten Betragsmittelwerten $\overline{A}_s(f_i,t)$ oder $\overline{A}_{opt,s}(f_i,t)$ und der mittleren Abweichung $s_s(f_i,t)$ oder $s_{opt,s}(f_i,t)$ wird nun eine normierte Abweichung $D_s(f_i,t)$ des ersten Betrages $A_{1,s}$ vom Mittelwert $\overline{A}_s$ gemäß der nachfolgenden Gleichung berechnet.

$$D_s(f_{1,i},t_m) = (A_{1,s}(f_{1,i},t_m) - \overline{A}_s(f_{1,i},t))/s_s(f_{1,i},t) \quad \text{oder}$$

$$D_s(f_{1,i},t_m) = (A_{1,s}(f_{1,i},t_m) - \overline{A}_{opt,s}(f_{1,i},t))/s_{opt,s}(f_{1,i},t)$$

Zur Ermittlung des zum Zeitpunkt t gültigen Betragsmittelwertes $\overline{A}_s(f_{1,i},t)$ und der zu diesem Zeitpunkt t gültigen mittleren Abweichung $s_s(f_{1,i},t)$ werden die ersten Beträge $A_{1,s}(f_{1,i},t_m)$ von M Spektren ausgewertet. Mit anderen Worten: Sowohl der Betragsmittelwert $\overline{A}_s(f_{1,i},t)$ oder $\overline{A}_{opt,s}(f_{1,i},t)$ als auch die mittlere Abweichung $s_s(f_{1,i},t)$ oder $s_{opt,s}(f_{1,i},t)$ werden ständig mit Hilfe von M Transformationen aktualisiert. Diese Aktualisierung erfolgt in ersten Zeitschritten $\delta t_1$. Der der Berechnung des neuen Betragsmittelwertes $\overline{A}_s(f_{1,i},t+\delta t_1)$ oder $\overline{A}_{opt,s}(f_{1,i},t+\delta t_1)$ und der neuen mittleren Abweichung $s_s(f_{1,i},t+\delta t_1)$ oder $s_{opt,s}(f_{1,i},t+\delta t_1)$ zugrundeliegende Datensatz $\underline{A}_{1,s}(t+\delta t_1)$ wird dabei durch Streichung des ersten (ältesten) Betrages und Hinzufügen des neuesten Betrages gebildet. Dies sind bei symmetrisch zum Zeitpunkt t angeordnetem Zeitabschnitt T die ersten Beträge

$$A_{1,s}(f_{1,i},t - \frac{M-1}{2} \delta t_1) \quad \text{bzw.} \quad A_{1,s}(f_{1,i},t + \frac{M-1}{2} \delta t_1).$$

In einer vorteilhaften Ausgestaltung wird die normierte Abweichung $D_s(t,f_{1,i})$ zusätzlich in einem die Frequenz $f_{1,i}$ umgebenden, aus $2L+1$ Frequenzen bestehenden Frequenzbereich $f_{1,i-L}, f_{1,i-L+1}, \ldots f_{1,i+L}$ gemittelt und eine mittlere normierte Abweichung $\overline{D}_s(f_{1,i},t)$ durch die Gleichung

$$\overline{D}_s(f_{1,i},t) = \frac{1}{1+2L} \sum_{k=-L}^{k=+L} D_s(f_{1,i+k},t)$$

bestimmt. Dieser zusätzliche Rechenschritt führt zu einer Reduzierung der Höhe und Schwankungsbreite der normierten Abweichung in den Bereichen, in denen nur Untergrundsignale vorliegen. Die Nutzsignal-Anteile werden durch das Mitteln im Frequenzbereich nicht merklich verändert, da sie immer konzentriert um benachbarte Frequenzlinien auftauchen. Durch diese Maßnahme erfolgt nochmals eine Verbesserung des Signal-Untergrund-Verhältnisses um weitere 10 bis 15 dB.

Eine weitere Verbesserung des Signal-Untergrund-Verhältnisses wird erreicht, wenn zusätzlich ein Schwellenwert $D_{0,s}$ eingeführt wird und eine normierte Abweichung $\overline{D}_{v,s}(f_{1,i},t)$ mit Hilfe der Beziehung $\overline{D}_{v,s} = D_{0,s}$ für $\overline{D}_s < D_{0,s}$ und $\overline{D}_{v,s} = \overline{D}_s$ für $\overline{D}_s \geq D_{0,s}$ bestimmt wird.

Die auf diese Weise ermittelten normierten Abweichungen $D_s(f_{1,i},t)$, $\overline{D}_s(f_{1,i},t)$ oder $\overline{D}_{v,s}(f_{1,i},t)$ werden quadriert und über alle diskreten Frequenzen $f_i$ summiert:

$$S_s(t) = \sum_{i=1}^{N} D_s(f_{1,i},t)^2 / N \qquad (a)$$

$$S_s(t) = \sum_{i=1}^{N} \overline{D}_s(f_{1,i},t)^2 / N \qquad (b)$$

oder

$$S_s(t) = \sum_{i=1}^{N} \overline{D}_{v,s}(\underline{f}_{1,i}, t)^2 / N \qquad (c)$$

Aus dieser Summe $S_s(t)$ wird nun eine erste Bewertungsfunktion $K_{1,s}(t)$ durch Bildung der Wurzel abgeleitet:

$$K_{1,s}(t) = \sqrt{S_s(t)} \qquad (1)$$

Diese dient als Indikator für das Auftreten eines Aufschlags. Alternativ hierzu kann die Bewertungsfunktion auch durch Berechnung der Differenz zwischen der Wurzel aus der Summe $S_s(t)$ und einem gleitenden zeitlichen Mittelwert dieser Wurzel

$$\tilde{K}_{1,s}(t) = K_{1,s}(t) - \overline{K}_{1,s}(t) \qquad (2)$$

gebildet werden und als Kenngröße für das Auftreten eines Aufschlags dienen. Überschreitet $K_{1,s}(t)$ oder $\tilde{K}_{1,s}(t)$ einen ersten Schwellwert $K_{1,0}$ (Alarmschwelle), der bei Gasturbinen zwischen 1,5 und 2 beträgt, so stellt dies ein Indiz für den Aufprall eines losen Teiles dar. Den folgenden Erläuterungen werden nun beispielhaft nach Gleichung (1) berechnete Bewertungsfunktionen K zugrundegelegt.

Die Genauigkeit, mit der für jeden der Sensoren eine Bestimmung des Zeitpunktes $t_s$, in dem das Ereignis auftritt und damit der Laufzeitdifferenzen möglich ist, hängt wesentlich von der Anstiegsgeschwindigkeit der ersten Bewertungsfunktion $K_{1,s}$ ab. Der Anstieg der ersten Bewertungsfunktion $K_{1,s}$ wird aber um so langsamer erfolgen, je größer das erste Zeitfenster $\Delta t_1$ ist.

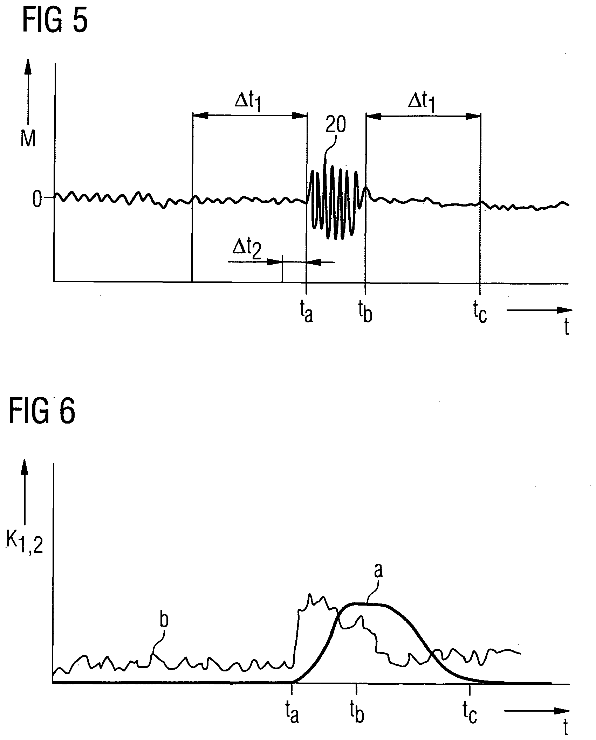

Dies ist in Fig. 5 und 6 für einen Messkanal veranschaulicht. In Fig. 5 ist ein idealisiertes Messsignal M gegen die Zeit t aufgetragen, dem ein Burst 20 im Zeitintervall $t_a$ bis $t_b$ überlagert ist. Fig. 6 zeigt ein idealisiertes Diagramm, in dem eine erste und zweite Bewertungsfunktion $K_1$ (Kurve a) bzw. $K_2$ (Kurve b) gegen die Zeit t aufgetragen sind, die mit unterschiedlichem ersten und zweiten innerhalb des Zeitbereiches TS liegenden Zeitfenster $\Delta t_1$ bzw. $\Delta t_2$ aus dem Messsignal M der Fig. 5 abgeleitet worden sind. Wird nun die erste Bewertungsfunktion $K_1$ in einem ersten Zeitfenster $\Delta t_1$ ermittelt, in dem der Burst 20 noch nicht begonnen hat, ergibt sich im Idealfall $K_1 = 1$ (wenn anstelle von $K_1$ als erste Bewertungsfunktion $\tilde{K}_1$ verwendet wird, ergibt sich im Idealfall $\tilde{K}_1 = 0$). Das erste Zeitfenster $\Delta t_1$ wandert nun in ersten Zeitschritten $\delta t_1$ nach rechts und der Burst 20 wird sukzessive vom ersten Zeitfenster $\Delta t_1$ erfasst, so dass bei einer Fouriertransformation die im Burst 20 enthaltenen Frequenzanteile zunehmend eine größere Rolle bei der Berechnung der ersten Bewertungsfunktion $K_1$ spielen. Wenn nun das erste Zeitfenster $\Delta t_1$ mit seinem rechten Rand das Ende des Bursts 20 zum Zeitpunkt $t_b$ erreicht, liegt der Burst 20 vollständig innerhalb dieses ersten Zeitfensters $\Delta t_1$, so dass die erste Bewertungsfunktion $K_1$ ihr Maximum erreicht hat. Wenn dann der linke Rand des ersten Zeitfensters $\Delta t_1$ mit dem Ende des Bursts 20 zusammenfällt, sinkt die erste Bewertungsfunktion $K_1$ erneut auf 1 ab. Aufgrund der Breite des ersten Zeitfensters $\Delta t_1$, die wenigstens der Breite eines zu erwartenden Bursts 20 entspricht, wird der Anstieg der ersten Bewertungsfunktion $K_1$ relativ langsam in einem Zeitfenster $t_a$ bis $t_b$ erfolgen, wie dies in Kurve a der Fig. 6 wiedergegeben ist. In Fig. 5 ist nun ein zweites Zeitfenster $\Delta t_2$ eingezeichnet, das signifikant kleiner ist als das erste Zeitfenster $\Delta t_1$. Mit dem zweiten Zeitfenster $\Delta t_2$ wird nun die zweite Bewertungsfunktion $K_2$ in zweiten kürzeren Zeitschritten $\delta t_2 < \delta t_1$ mit denselben, vorstehend bei der Berechnung der ersten Bewertungsfunktion $K_1$ erläuterten Algorithmen und mit an das kürzere zweite Zeitfenster $\Delta t_2$ angepassten zweiten Frequenzen $f_{2,i}$ (Parameter) berechnet. Da sowohl das zweite Zeitfenster $\Delta t_2$ als auch die zweiten Zeitschritte $\delta t_2$ kürzer sind als das erste Zeitfenster $\Delta t_1$ bzw. die ersten Zeitschritte $\delta t_1$, steigt diese signifikant schneller an als die erste Bewertungsfunktion $K_1$ und erreicht ihr Maximum bereits in einem signifikant kürzeren Zeitraum, der im Beispiel der Figur etwa der Länge des zweiten Zeitfensters $\Delta t_2$ entspricht, wie dies in Kurve b der Fig. 6 zu erkennen ist. In dieser Figur ist auch veranschaulicht, dass die mit dem zweiten kürzeren Zeitfenster $\Delta t_2$ berechnete zweite Bewertungsfunktion $K_2$ aufgrund der der Fouriertransformation zu Grunde liegenden kleineren Datenmenge ein signifikant höheres Rauschen aufweist.

Aufgrund des kleineren Zeitfensters $\Delta t_2$ umfasst das Frequenzspektrum weniger diskrete Frequenzen. Mit anderen Worten: Die zweiten Beträge $A_{2,s}(f_{2,i},t)$ liegen für weniger zweite Frequenzen $f_{2,i}$ vor, wobei jedoch die Menge der zweiten Frequenzen $f_{2,i}$ eine Teilmenge der Menge der ersten Frequenzen $f_{1,i}$ ist.

Mit Hilfe der für alle Messkanäle mit den vorstehend genannten Algorithmen berechneten ersten Bewertungsfunktion $K_{1,s}(t)$ erfolgt nun eine Überwachung aller Messkanäle auf das Auftreten eines Bursts mit einer sehr hohen Empfindlichkeit, wobei in Kauf genommen wird, dass der Beginn des Burst in den einzelnen Kanälen nur mit geringer Genauigkeit bestimmt werden kann.

Wird nun in einem der Messkanäle zu einem Triggerzeitpunkt $t_0$ ein Burst festgestellt (Anstieg der ersten Bewertungsfunktion $K_{1,s}$ über einen ersten Schwellwert $> K_{1,0}$) so wird ein Triggersignal ausgelöst, das die jeweils für etwa 10s in allen Kanälen gespeicherten Messsignale in einem Zeitbereich TS einfriert, der etwa symmetrisch um den Zeitpunkt $t_0$ des Triggersignals liegt (Pretriggerung). Für alle Kanäle werden dann jeweils zweite Bewertungsfunktionen $K_{2,s}(t)$ mit den vorstehend genannten Algorithmen berechnet, wobei jedoch für diese Berechnung die kurz vor oder zum Triggerzeitpunkt $t_0$ aus den ersten Beträgen $A_{1,s}(f_{1,i},t)$ ermittelten und für die zweiten Frequenzen $f_{2,i}$ geltenden Betragsmittelwerte $\overline{A}_s(f_{2,i},t_0)$ und Standardabweichungen $s_s(f_{2,i},t_0)$ zugrundegelegt werden. Dies ist möglich, da bis zum Triggerzeitpunkt ein überlagertes Burstsignal nicht vorliegt und somit diese Werte den reinen Betriebsuntergrund repräsentieren, wobei außerdem angenommen wird, dass sich in der kurzen Zeit danach während des Burst der Betriebsuntergrund nicht signifikant ändert.

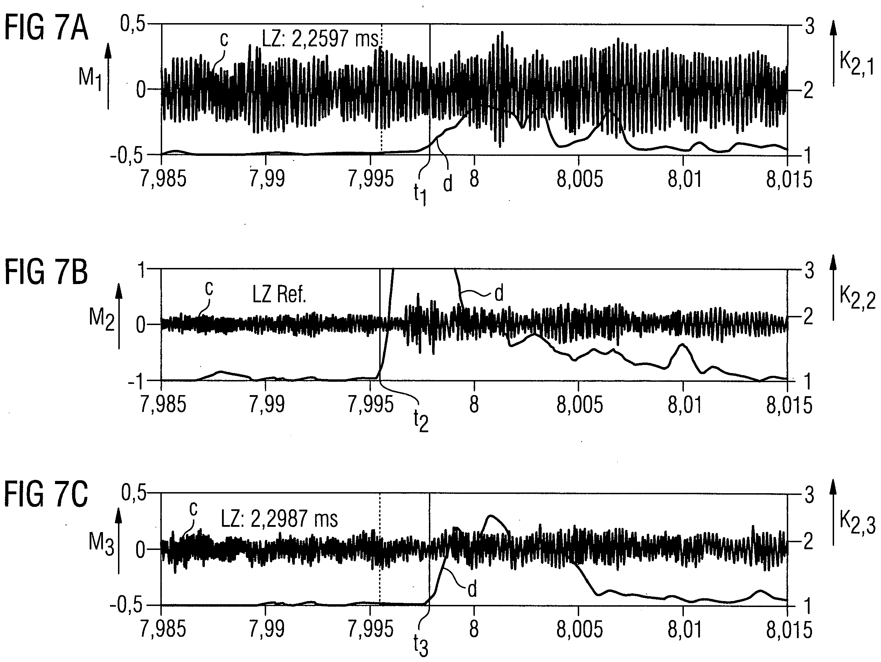

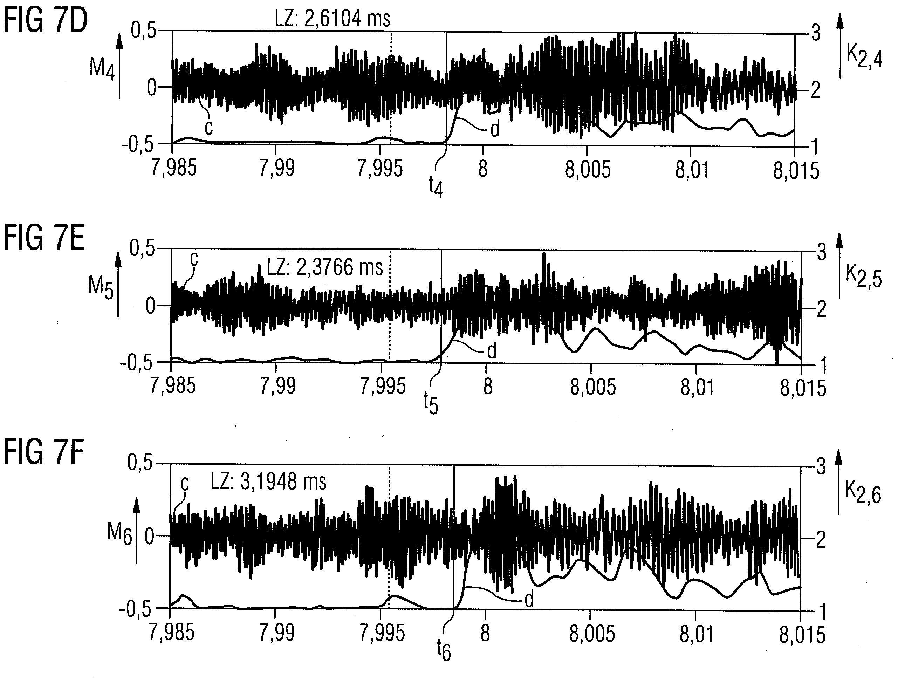

Fig. 7a-f zeigen nun das jeweils von einem Sensor $4_s$ ($4_{1-6}$) an einem Kernreaktordruckbehälter in unterschiedlichen Messpositionen erfasste Messsignal $M_s$ ($M_{1-6}$) (Kurven c) für einen Zeitraum von etwa 30 ms. Den Diagrammen kann nun unmittelbar entnommen werden, dass allenfalls im Diagramm gemäß Fig. 7b im Messsignal $M_2$ das Stattfinden eines Ereignisses identifiziert werden kann, ohne dass es jedoch möglich ist, dem Messsignal unmittelbar zu entnehmen, ob es sich um einen Übergang des Betriebszustandes oder um ein impulsförmiges Ereignis handelt, das auf einen Aufprall eines losen Teils zurückzuführen ist.

Die mit Hilfe eines der oben genannten Verfahren gewonnene zweite Bewertungsfunktion $K_{2,s}(t)$ ist in den Figuren 7a-f jeweils als kontinuierliche Kurve d eingetragen. Im dargestellten Beispiel wurde die zweite Bewertungsfunktion $K_{2,s}(t)$ mit der iterativen Methode berechnet. In den Figuren ist nun zu erkennen, dass die zweite Bewertungsfunktion $K_{2,s}(t)$ jeweils zu unterschiedlichen Zeitpunkten $t_s = t_1$ bis $t_6$ einen signifikanten Anstieg aufweist. Diese Zeitpunkte $t_s$ können beispielsweise als diejenigen Zeitpunkte bestimmt werden, in denen die zweiten Bewertungsfunktionen $K_{2,s}(t)$ jeweils einen vorgegebenen zweiten Schwellwert $K_{2,0}$ überschreiten. Sind diese Zeitpunkte $t_s$ bekannt, kann nicht nur das Auftreten eines impulsartigen Ereignisses sicher erkannt werden, sondern es ist auch möglich, bei bekanntem Sensorort aus den Laufzeitdifferenzen LZ $t_1 - t_2$, $t_1 - t_3$,... (im Beispiel $t_1 - t_2$, $t_3 - t_2$, $t_4 - t_2$, $t_5 - t_2$ und $t_6 - t_2$) auf den Ort des Auf schlags zu schließen.

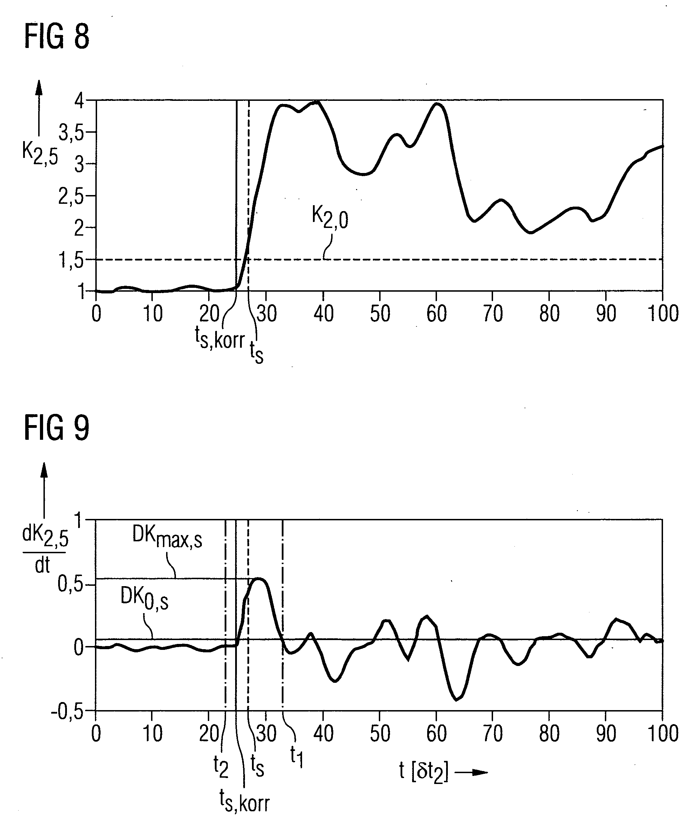

Mit Hilfe der auf diese Weise für jeden der Messkanäle berechneten zweiten Bewertungsfunktion $K_{2,s}$ erfolgt in einem nächsten Schritt eine genauere Berechnung der Zeitpunkte $t_s$, in denen das durch die impulsartige Einwirkung verursachte Burstsignal am Ort des jeweiligen Sensors $4_s$ eintrifft. Diese genauere Berechnung wird nachfolgend anhand der in Fig. 8 und 9 dargestellten Diagramme erläutert.

Fig. 8 zeigt den typischen Verlauf einer auf diese Weise berechneten zweiten Bewertungsfunktion $K_{2,s}$ (zweiter Zeitschritt $\delta t_2 = 0{,}16$ ms, zweites Zeitfenster $\Delta t_2 = 2{,}56$ ms). Diese zweite Bewertungsfunktion $K_{2,s}$ überschreitet einen zweiten Schwellwert $K_{2,0}$ zu einem Zeitpunkt $t_s$. Aufgrund dieses ersten Schwellwertes $K_{1,0}$ wird der Anstieg der zweiten Bewertungsfunktion $K_{2,s}$ einem Burst zugeordnet. Nunmehr wird die zweite Bewertungsfunktion $K_{2,s}$ nach der Zeit t differenziert. Der entsprechende Differenzialquotient $dK_{2,s}/dt$ ist als Kurve gegen die Zeit in Fig. 9 aufgetragen. In dieser Kurve wird nun ausgehend vom Zeitpunkt $t_s$ der Zeitpunkt gesucht, in dem der Differentialquotient 0 wird, d.h. die zweite Bewertungsfunktion $K_{2,s}$ das erste lokale Maximum erreicht. Dies ist zum Zeitpunkt t1 der Fall. Nunmehr wird ein Zeitpunkt t2 < t1 ermittelt, in dem die Kurve den Wert 0 erreicht. In diesem Bereich t2 bis t1 wird nun das Maximum $DK_{max,s}$ ermittelt, das die größte Steigung der zweiten Bewertungsfunktion $K_{2,s}$ angibt. Mit Hilfe dieses Maximums $DK_{max,s}$ wird nun ein Differenzschwellwert $DK_{0,s}$ mit der Beziehung $DK_{0,s} = \beta DK_{max,s}$ berechnet, wobei $\beta$ ein Wert zwischen 0,05 und 0,2 ist. Der Zeitpunkt $t_{s,korr}$, in dem die erste Ableitung $dK_{2,s}/dt$ im Zeitintervall t2 - t1 erstmals diesen Differenzschwellwert $DK_{0,s}$ überschreitet, wird nun als korrigierter Zeitpunkt für die Berechnung der Laufzeitdifferenzen herangezogen. Auf diese Weise ist eine exakte Bestimmung der Laufzeiten möglich.

Bezugszeichenliste

| | |
|---|---|
| 2 | Anlagenteil |
| $4_{1,s,p}$ | Sensor |
| 6 | Vorverstärker |
| 8 | Multiplexer |
| 10 | Analog/Digital-Wandler |
| 12 | Recheneinrichtung |
| 14 | Vergleichseinrichtung |

| 16 | Transientenrekorder |
|---|---|
| 18 | Auswerterechner |
| 20 | Burst |
| $M_s$ | Messsignal |
| $K_{1,s}$; $K_{2,s}$ | erste, zweite Bewertungsfunktion |
| t | Zeit |
| $\Delta t_{1,2}$ | erstes, zweites Zeitfenster |
| $\delta t_{1,2}$ | erster, zweiter Zeitschritt |
| $A_{1,s}$;$A_{2,s}$ | erster, zweiter Betrag |
| $f_i$ | Frequenz |
| $\overline{A}_s$ | Betragsmittelwert |
| $\underline{A}_{1,s}$ | Datensatz |
| T | Zeitabschnitt |
| TS | Zeitbereich |
| DT | Zeitabstand |
| $t_s$ | Zeitpunkt |
| ts,korr | korrigierter Zeitpunkt |
| $t_1$, $t_2$ | Zeitpunkt |
| $DK_{max,s}$ | Maximum |
| $DK_{0,s}$ | Differenzschwellwert |
| $K_{1,0}$ | erster Schwellwert |
| $K_{2,0}$ | zweiter Schwellwert |

## Patentansprüche

1. Verfahren zur Detektion des Ortes einer impulsartigen mechanischen Einwirkung auf ein Anlagenteil (2), bei dem ein im Anlagenteil (2) vorhandenes Betriebsgeräusch kontinuierlich mit einer Mehrzahl (P) von am Anlagenteil (2) angeordneten Sensoren ($4_s$) erfasst und von diesem in ein Messsignal ($M_s$) umgewandelt wird, mit folgenden Merkmalen:

   a) Die Messsignale ($M_s$) werden jeweils in Zeitabständen (DT) für einen Zeitbereiches (TS) gespeichert
   b) in zeitlich in ersten Zeitschritten ($\delta t_1$) aufeinanderfolgenden innerhalb des Zeitbereiches (TS) liegenden ersten Zeitfenstern ($\Delta t_1$) wird mit vorgegebenen ersten Parametern ($f_{1,i}$) einer mathematischen Transformationsvorschrift ein erster Betrag ($A_{1,s}(f_{1,i},t)$) der Transformierten jedes Messsignals ($M_s$) ermittelt,
   c) aus den für jeden der vorgegebenen ersten Parameter ($f_{1,i}$) bestimmten ersten Beträgen ($A_{1,s}(f_{1,i},t)$) wird für jeden ersten Zeitschritt ($\delta t_1$) jeweils eine erste Bewertungsfunktion ($K_{1,s}(t)$) abgeleitet,
   d) die ersten Bewertungsfunktionen ($K_{1,s}(t)$) werden jeweils mit einem ersten Schwellwert ($K_{1,0}$) verglichen und das Überschreiten des ersten Schwellwerts ($K_{1,0}$) von zumindest einer der ersten Bewertungsfunktionen ($K_{1,s}(t)$) zu einem Triggerzeitpunkt ($t_0$) wird als Indiz für das Vorliegen eines die mechanische Einwirkung anzeigenden impulsartigen Signalanteiles gewertet,
   e) in zeitlich in zweiten Zeitschritten ($\delta t_2$) aufeinanderfolgenden innerhalb des Zeitbereiches (TS) liegenden zweiten Zeitfenstern ($\Delta t_2$), die kleiner sind als die ersten Zeitfenster ($\Delta t_1$), werden mit vorgegebenen zweiten Parametern ($f_{2,i}$) der mathematischen Transformationsvorschrift und mit denselben Algorithmen zweite Bewertungsfunktionen ($K_{2,s}(t)$) ermittelt,
   f) aus den Zeitpunkten ($t_s$, $t_{s,korr}$), in denen die zweiten Bewertungsfunktionen ($K_{2,s}(t)$) jeweils ein vorgegebenes Kriterium erfüllen und aus den sich daraus ergebenden Laufzeitdifferenzen wird der Ort der Einwirkung bestimmt.

2. Verfahren nach Anspruch 1, bei dem die zweiten Zeitschritte ($\delta t_2$) kürzer sind als die ersten Zeitschritte ($\delta t_1$).

3. Verfahren nach Anspruch 1 oder 2, bei dem für jeden ersten Zeitschritt ($\delta t_1$) und jeden der vorgegebenen ersten Parameter ($f_{1,i}$) die Abweichung der ersten Beträge ($A_{1,s}(f_{1,i},t)$) von einem ersten Betragsmittelwert ($\overline{A}_{1,s}(f_{1,i},t)$) sowie eine diesem zugeordnete mittlere Abweichung ($s_s(f_{1,i},t)$ bestimmt werden, aus denen für jeden der vorgegebenen ersten Parameter ($f_{1,i}$) und für jeden ersten Zeitschritt ($\delta t_1$) die erste Bewertungsfunktion ($K_{1,s}(t)$) abgeleitet wird, und bei dem sowohl der zum Triggerzeitpunkt ($t_0$) für die zweiten Parameter ($f_{2,i}$) geltende Betragsmittelwert ($\overline{A}_{1,s}(f_{2,i},t_0)$) als auch die diesem zugeordnete mittlere Abweichung ($s_s(f_{1,i},t_0)$ der Berechnung der zweiten Bewertungsfunktion ($K_{2,s}(t)$) zugrundegelegt werden.

4. Verfahren nach Anspruch 1,2 oder 3, bei dem das vorgegebene Kriterium erfüllt ist, wenn die zweiten Bewertungsfunktionen ($K_{2,s}(t)$) jeweils einen zweiten Schwellwert ($K_{2,0}$) überschreiten.

5. Verfahren nach Anspruch 1,2 oder 3, bei dem das vorgegebene Kriterium erfüllt ist, wenn die erste Ableitung der zweiten Bewertungsfunktion ($K_{2,s}(t)$) einen Differenzschwellwert ($DK_{0,s}$) überschreitet.

6. Verfahren nach Anspruch 5, bei dem der Differenzschwellwert ($DK_{0,s}$) aus der maximale Steigung ($DK_{max,s}$) einer Anstiegsflanke der zweiten Bewertungsfunktion ($K_{2,s}(t)$) abgeleitet wird.

7. Verfahren nach Anspruch 6, bei dem der Differenzschwellwert ($DK_{0,s}$) mit der Beziehung $DK_{0,s} = \beta\, DK_{max,s}$ bestimmt wird, wobei $0{,}05 \leq \beta \leq 0{,}2$ ist.

8. Einrichtung zur Detektion des Ortes einer impulsartigen mechanischen Einwirkung auf ein Anlagenteil (2), mit mit einer Mehrzahl (P) von am Anlagenteil (2) angeordneten Sensoren ($4_s$) zum kontinuierlichen Erfassen und Messen eines im Anlagenteil (2) vorhandenen Betriebsgeräusches, sowie mit zumindest einem den Sensoren ($4_s$) nachge-schalteten A/D-Wandler (10) zum Digitalisieren der von den Sensoren ($4_s$) erfassten Messsignale ($M_s$) und zum Weiterleiten der digitalisierten Messsignale (M) an eine Recheneinrichtung (12) zum Durchführen der folgenden Rechenschritte:

a) Die Messsignale ($M_s$) werden jeweils in Zeitabständen (DT) für einen Zeitbereich (TS) gespeichert,
b) in zeitlich in ersten Zeitschritten ($\delta t_1$) aufeinanderfolgenden innerhalb des Zeitbereiches (TS) liegenden ersten Zeitfenstern ($\Delta t_1$) wird mit vorgegebenen ersten Parametern ($f_{1,i}$) einer mathematischen Transformationsvorschrift ein erster Betrag ($A_{1,s}(f_{1,i},t)$) der Transformierten jedes Messsignals ($M_s$) ermittelt,
c) aus den für jeden der vorgegebenen ersten Parameter ($f_{1,i}$) bestimmten ersten Beträgen ($A_{1,s}(f_{1,i},t)$) wird für jeden ersten Zeitschritt ($\delta t_2$) jeweils eine erste Bewertungsfunktion ($K_{1,s}(t)$) abgeleitet,
d) die ersten Bewertungsfunktionen ($K_{1,s}(t)$) werden jeweils mit einem ersten Schwellwert ($K_{1,0}$) verglichen und das Überschreiten des Schwellwerts ($K_{1,0}$) von zumindest einer der ersten Bewertungsfunktionen ($K_{1,s}(t)$) zu einem Triggerzeitpunkt ($t_0$) wird als Indiz für das Vorliegen eines die mechanische Einwirkung anzeigenden impulsartigen Signalanteiles gewertet,
e) in zeitlich in zweiten Zeitschritten ($\delta t_2$) aufeinanderfolgenden innerhalb des Zeitbereiches (TS) liegenden zweiten Zeitfenstern ($\Delta t_2$), die kleiner sind als die ersten Zeitfenster ($\Delta t_1$), werden mit vorgegebenen zweiten Parametern ($f_{2,i}$) der mathematischen Transformationsvorschrift und mit denselben Algorithmen zweite Bewertungsfunktionen ($K_{2,s}(t)$) ermittelt,
f) aus den Zeitpunkten ($t_s$), in denen die zweiten Bewertungsfunktionen ($K_{2,s}(t)$) jeweils ein vorgegebenes Kriterium erfüllen und aus den sich daraus ergebenden Laufzeitdifferenzen wird der Ort der Einwirkung bestimmt.

9. Einrichtung nach Anspruch 8, mit einem in der Recheneinrichtung (12) implementierten Algorithmus zum Durchführen der Verfahren nach einem der Ansprüche 2 bis 7.

**Claims**

1. Method for detecting the position of a pulsed mechanical effect on a plant component (2), wherein an operating noise present in the plant component (2) is continuously recorded by a plurality (P) of sensors ($4_s$) arranged on the plant component (2) and is converted by this into a measurement signal ($M_s$), having the following features:

a) the measurement signals ($M_s$) are respectively saved in time intervals (DT) for a time span (TS)
b) in first time windows ($\Delta t_1$) which are temporally consecutive in first time steps ($\delta t_1$) and which are located within the time span (TS), a first value ($A_{1,s}(f_{1,i},t)$) of the transforms of each measurement signal ($M_s$) is deter-mined using predetermined first parameters ($f_{1,i}$) of a mathematical transformation rule,
c) a first evaluation function ($K_{1,s}(t)$) is respectively derived for each first time step ($\delta t_1$) from the first values ($A_{1,s}(f_{1,i},t)$) determined for each of the predetermined first parameters ($f_{1,i}$),
d) the first evaluation functions ($K_{1,s}(t)$) are respectively compared to a first threshold value ($k_{1,0}$) and exceeding the first threshold value ($k_{1,0}$) of at least one of the first evaluation functions ($K_{1,s}(t)$) at a trigger time point ($t_0$) is considered as an indication of the presence of a pulsed signal component displaying the mechanical effect,

e) in second time windows ($\Delta t_2$) which are temporally consecutive in second time steps ($\delta t_2$) and which are located within the time span (TS), said second time windows ($\Delta t_2$) being smaller than the first time windows ($\Delta t_1$), second evaluation functions ($K_{2,s}(t)$) are determined using predetermined second parameters ($f_{2,i}$) of the mathematical transformation rule and using the same algorithms,

f) the position of the effect is determined from the time points ($t_s$, $t_{s, korr}$) in which the second evaluation functions ($K_{2,s}(t)$) respectively fulfil a predetermined criterion and from the resulting time differences.

2. Method according to claim 1, wherein the second time steps ($\delta t_2$) are shorter than the first time steps ($\delta t_1$).

3. Method according to claim 1 or 2, wherein, for each first step ($\delta t_1$) and each of the predetermined first parameters ($f_{1,i}$), the deviation of the first values ($A_{1,s}(f_{1,i},t)$) from a first average value ($\overline{A}_{1,s}(f_{1,i},t)$), and an average deviation ($s_s(f_{1,i},t)$) associated with this, are determined, from which the first evaluation function ($K_{1,s}(t)$) is derived for each of the predetermined first parameters ($f_{1,i}$) and for each first time step ($\delta t_1$), and wherein both the average value ($\overline{A}_{1,s}(f_{2,i}, t_0)$) which is valid at the trigger time point ($t_0$) for the second parameter ($f_{2,i}$) and the average deviation ($s_s(f_{1,i},t_0)$) associated with this from the calculation of the second evaluation function ($K_{2,s}(t)$) are taken as a basis.

4. Method according to claim 1,2 or 3, wherein the predetermined criterion is fulfilled when the second evaluation function ($K_{2,s}(t)$) exceeds a second threshold value ($K_{2,0}$) in each case.

5. Method according to claim 1, 2 or 3, wherein the predetermined criterion is fulfilled when the first derivative of the second evaluation function ($K_{2,s}(t)$) exceeds a difference threshold ($DK_{0,s}$).

6. Method according to claim 5, wherein the difference threshold ($DK_{0,s}$) is derived from the maximum increase ($DK_{max,s}$) of a rising edge of the second evaluation function ($K_{2,s}(t)$).

7. Method according to claim 6, wherein the difference threshold ($DK_{0,s}$) is determined by the equation $DK_{0,s} = \beta\ DK_{max,s}$, wherein $0.05 \leq \beta \leq 0.2$.

8. Device for detecting the position of a pulsed mechanical effect on a plant component (2), having a plurality (P) of sensors ($4_s$) arranged on the plant component (2) for continuously recording and measuring an operating noise present in the plant component (2), and having at least one A/D converter (10) which is connected downstream from the sensors ($4_s$) for digitising the measurement signals ($M_s$) recorded by the sensors ($4_s$) and for transferring the digitised measurement signals (M) to a computing unit (12) for carrying out the following calculation steps:

a) the measurement signals ($M_s$) are respectively saved in time intervals (DT) for a time span (TS),

b) in first time windows ($\Delta t_1$) which are temporally consecutive in first time steps ($\delta t_1$) and which are located within the time span (TS), a first value ($A_{1,s}(f_{1,i},t)$) of the transforms of each measurement signal ($M_s$) is determined using predetermined first parameters ($f_{1,i}$) of a mathematical transformation rule,

c) a first evaluation function ($K_{1,s}(t)$) is respectively derived for each first time step ($\delta t_2$) from the first values ($A_{1,s}(f_{1,i},t)$) determined for each of the predetermined first parameters ($f_{1,i}$),

d) the first evaluation functions ($K_{1,s}(t)$) are respectively compared to a first threshold value ($k_{1,0}$) and exceeding the first threshold value ($k_{1,0}$) of at least one of the first evaluation functions ($K_{1,s}(t)$) at a trigger time point (to) is considered as an indication of the presence of a pulsed signal component displaying the mechanical effect,

e) in second time windows ($\Delta t_2$)which are temporally consecutive in second time steps ($\delta t_2$) and which are located within the time span (TS), said second time windows ($\Delta t_2$) being smaller than the first time windows ($\Delta t_1$), second evaluation functions ($K_{2,s}(t)$) are determined using predetermined second parameters ($f_{2,i}$) of the mathematical transformation rule and using the same algorithms,

f) the position of the effect is determined from the time points ($t_s$) in which the second evaluation functions ($K_{2,s}(t)$) respectively fulfil a predetermined criterion and from the resulting time differences.

9. Device according to claim 8, having an algorithm which is implemented in the computing unit (12) for carrying out the method according to one of claims 2 to 7.

**Revendications**

1. Procédé permettant de détecter l'endroit où un effet mécanique impulsionnel est appliqué sur une partie (2) d'une installation, procédé selon lequel un bruit de fonctionnement présent dans la partie (2) de l'installation est détecté en continu à l'aide d'une pluralité (P) de capteurs (4s) placés sur cette partie (2) de l'installation puis converti par ce dernier en un signal de mesure (Ms) ayant les caractéristiques suivantes :

a) Les signaux de mesure (Ms) sont enregistrés chacun à des intervalles de temps (DT) pour une plage de temps (TS),

b) Dans des premières fenêtres de temps ($\Delta t1$) successives dans le temps dans des premiers paliers de temps ($\delta t_1$) et situées dans les limites de la plage de temps (TS), une première valeur ($A_{1,s}(f_{1,i},t)$) de la transformée de chaque signal de mesure ($M_s$) est déterminée avec des premiers paramètres prédéfinis ($f_{1,i}$) d'une spécification de transformation mathématique,

c) Une première fonction d'évaluation ($K_{1,s}(t)$) est dérivée des premières valeurs ($A_{1,s}(f_{1,i},t)$) déterminées pour chacun des premiers paramètres prédéfinis ($f_{1,i}$)

d) les premières fonctions d'évaluation ($K_{1,s}(t)$) sont comparées respectivement avec une première valeur de seuil ($K_{1,0}$) et le dépassement de la première valeur de seuil ($K_{1,0}$) d'au moins une des premières fonctions d'évaluation ($K_{1,s}(t)$) à un moment de déclenchement ($t_0$) est évalué comme indice de la présence d'une fraction de signal impulsionnel indiquant un effet mécanique,

e) Dans des deuxièmes fenêtres de temps ($\Delta t_2$) successives dans le temps dans des deuxièmes paliers de temps ($\delta t_2$) et situées dans les limites de la plage de temps (TS), lesquelles deuxièmes fenêtres de temps sont plus petites que les premières fenêtres de ($\Delta t_1$), des deuxièmes fonctions d'évaluation ($K_{2,s}(t)$) sont déterminées avec des deuxièmes paramètres prédéfinis ($f_{2,i}$) de la spécification de transformation mathématique et avec les mêmes algorithmes,

f) L'endroit de l'effet est déterminé à partir des instants ($t_s$, $t_{s,corr}$), où les deuxièmes fonctions d'évaluation ($K_{2,s}(t)$ remplissent chacun un critère prédéfini et à partir des différences de durée qui en découlent.

2. Procédé selon la revendication 1, selon lequel les deuxièmes paliers de temps ($\delta t_2$) sont plus courts que les premiers ($\delta t_1$).

3. Procédé selon la revendication 1 ou la revendication 2, selon lequel, pour chaque premier palier de temps ($\delta t_1$) et chacun des premiers paramètres prédéfinis ($f_{1,i}$), on détermine l'écart des premières valeurs ($A_{1,s}(f_{1,i},t)$) par rapport à une première valeur moyenne ($\overline{A}_{1,s}(f_{1,i},t)$) ainsi qu'un écart moyen ($s_s(f_{1,i},t)$, affecté à celle-ci, à partir desquels est dérivée la première fonction d'évaluation ($K_{1,s}(t)$ pour chacun des premiers paramètres prédéfinis ($f_{1,i}$) et pour chaque premier palier de temps ($\delta t_1$), et procédé selon lequel aussi bien la valeur moyenne ($\overline{A}_{1,s}(f_{2,i},t_0)$) valable pour les deuxièmes paramètres ($f_{2,i}$) au moment de déclenchement ($t_0$) que l'écart moyen ($s_s(f_{1,i},t_0)$, affecté à cette valeur moyenne, sert de base au calcul de la deuxième fonction d'évaluation ($K_{2,s}(t)$).

4. Procédé selon la revendication 1, la revendication 2 ou la revendication 3, selon lequel le critère prédéfini est rempli lorsque les deuxièmes fonctions d'évaluation ($K_{2,s}(t)$) dépassent une deuxième valeur de seuil ($K_{2,0}$).

5. Procédé selon la revendication 1, la revendication 2 ou la revendication 3, selon lequel le critère prédéfini est rempli lorsque la première dérivation de la deuxième fonction d'évaluation ($K_{2,s}(t)$) dépasse une valeur de seuil différentielle ($DK_{0,s}$).

6. Procédé selon la revendication 5, selon lequel la valeur de seuil différentielle ($DK_{0,s}$) est dérivée du gradient maximum ($DK_{max,s}$) d'un flanc antérieur de la deuxième fonction d'évaluation ($K_{2,s}(t)$).

7. Procédé selon la revendication 6, selon lequel la valeur de seuil différentielle ($DK_{0,s}$) est déterminée avec la relation $DK_{0,s} = ß\, DK_{max,s}$, alors que $0{,}05 \leq ß \leq 0{,}2$.

8. Dispositif permettant de détecter l'endroit où un effet mécanique impulsionnel est appliqué sur une partie (2) d'une installation comportant une pluralité (P) de capteurs (4s) placés sur cette partie (2) de l'installation pour la détection et la mesure continues d'un bruit de fonctionnement présent dans la partie (2) de l'installation, et comportant un convertisseur A/D (10), placé en aval d'au moins un des capteurs ($4_s$) destiné à la numérisation des signaux de mesure ($M_s$) détectés par les capteurs ($4_s$), et à la transmission des signaux de mesure numérisés (M) à un calculateur (12) destiné à l'exécution des étapes de calcul suivantes :

a) Les signaux de mesure (Ms) sont enregistrés chacun à des intervalles de temps (DT) pour une plage de temps (TS)

b) Dans des premières fenêtres de temps ($\Delta t1$) successives dans le temps dans des premiers paliers de temps ($\delta t_1$) et situées dans les limites de la plage de temps (TS), une première valeur ($A_{1,s}(f_{1,i},t)$) de la transformée de chaque signal de mesure ($M_s$) est déterminée avec des premiers paramètres prédéfinis ($f_{1,i}$) d'une spécification de transformation mathématique,

c) Une première fonction d'évaluation ($K_{1,s}(t)$) est dérivée des premières valeurs ($A_{1,s}(f_{1,i},t)$) déterminées pour chacun des premiers paramètres prédéfinis ($f_{1,i}$)

d) les premières fonctions d'évaluation ($K_{1,s}(t)$) sont comparées respectivement avec une première valeur de seuil ($K_{1,0}$) et le dépassement de la première valeur de seuil ($K_{1,0}$) d'au moins une des premières fonctions d'évaluation ($K_{1,s}(t)$) à un moment de déclenchement ($t_0$) est évalué comme indice de la présence d'une fraction de signal impulsionnel indiquant un effet mécanique,

e) Dans des deuxièmes fenêtres de temps ($\Delta t_2$) successives dans le temps dans des deuxièmes paliers de temps ($\delta t_2$) et situées dans les limites de la plage de temps (TS), lesquelles deuxièmes fenêtres de temps sont plus petites que les premières fenêtres de ($\Delta t_1$), des deuxièmes fonctions d'évaluation ($K_{2,s}(t)$) sont déterminées avec des deuxièmes paramètres prédéfinis ($f_{2,i}$) de la spécification de transformation mathématique et avec les mêmes algorithmes,

f) L'endroit de l'effet est déterminé à partir des instants ($t_s$, $t_{s,corr}$), où les deuxièmes fonctions d'évaluation ($K_{2,s}(t)$ remplissent chacun un critère prédéfini et à partir des différences de durée qui en découlent.

9. Dispositif selon la revendication 8, comportant un algorithme implémenté dans le calculateur 12) pour l'exécution des procédés selon l'une quelconque des revendications 2 à 7.

## FIG 1

$K_{1,S}(t)$

$M_1$  $M_P$

$4_1$  $4_S$  $4_P$

2

## FIG 2

DT

M

TS

0

$\Delta t_1$

$\Delta t_1$

$\delta t_1$

t

## FIG 3

$A_{1,s}(f_{1,i})$

$T$

$A_{1,s}(f_{1,i},t_0)$  $A_{1,s}(f_{1,i},t_m)$

$A_{1,s}(f_{1,i},t_0+j\delta t_1)$

$\delta t_1$

$t$

$t_1-\dfrac{M-1}{2}\delta t_1$

$t_1$

$t_1+\dfrac{M-1}{2}\delta t_1$

$$t=t_1 : \underline{A}_{1,s}(f_{1,i},t_1)=\{A_{1,s}(f_{1,i},t_1-\frac{M-1}{2}\delta t_1),\ A_{1,s}(f_{1,i},t_1-\frac{M-3}{2}\delta t_1),...$$

$$...,A_{1,s}(f_{1,i},t_1+\frac{M-1}{2}\delta t_1)\}$$

## FIG 4

$\overline{A}_s(f_{1,i})$

$\overline{A}_s(f_{1,i},t_1)$

$\overline{A}_{s,0}(f_{1,i})$

$\delta t_1$

$t_1$

$t$

## FIG 5

## FIG 6

FIG 7A

FIG 7B

FIG 7C

EP 1 922 530 B1

## FIG 7D

$M_4$ · $K_{2,4}$

LZ: 2,6104 ms

c, d, $t_4$

Axis: 0,5 — 0 — -0,5; 3 — 2 — 1

7,985 · 7,99 · 7,995 · 8 · 8,005 · 8,01 · 8,015

## FIG 7E

$M_5$ · $K_{2,5}$

LZ: 2,3766 ms

c, d, $t_5$

Axis: 0,5 — 0 — -0,5; 3 — 2 — 1

7,985 · 7,99 · 7,995 · 8 · 8,005 · 8,01 · 8,015

## FIG 7F

$M_6$ · $K_{2,6}$

LZ: 3,1948 ms

c, d, $t_6$

Axis: 0,5 — 0 — -0,5; 3 — 2 — 1

7,985 · 7,99 · 7,995 · 8 · 8,005 · 8,01 · 8,015

# FIG 8

# FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0765466 B1
- DE 19857552 A1
- DE 19843615 C2
- DE 19727114 C2
- DE 19545008 C2
- US 6301572 B1

- GB 2288235 A
- US 4888948 A
- WO 0175272 A2
- WO 03071243 A1
- DE 2223321 C2
- WO 03071243 A